# EUROPÄISCHE PATENTANMELDUNG

(11) **EP 0 945 362 A1**
(43) Veröffentlichungstag der Anmeldung: **29.09.1999**
(21) Anmeldenummer: 99104201.1
(22) Anmeldetag: 02.03.1999
(51) Int. Cl.: B65D 77/20

(54) **Verfahren zum Versiegeln eines Behälters**

(30) Priorität: 27.03.1998 DE 19813846
(71) Anmelder: 4P Rube Göttingen GmbH, D-37077 Göttingen (DE)
(72) Erfinder: Riess, Ludwig, 37120 Bovenden (DE); Friedlaender, Klaus-Michael, 37077 Göttingen (DE)
(74) Vertreter: Hutzelmann, Gerhard

(57) **Zusammenfassung**

Verfahren zum Versiegeln eines mit einem Siegelrand versehenen Behälters, der aus einer Kunststoff-Folie im Tiefziehverfahren hergestellt wird, mit einer Folie, die siegelfähig ausgerüstet ist, wobei wenigstens eine der beiden miteinander zu versiegelnden Oberflächen mit einer umlaufenden Rippe versehen wird, die im wesentlichen aus Siegelmaterial hergestellt wird.

## Beschreibung

Die Erfindung bezieht sich auf ein Verfahren zum Versiegeln eines mit einem Siegelrand versehenen Behälters, der aus einer Kunststoff-Folie im Tiefziehverfahren hergestellt wird, mit einer Folie, die siegelfähig ausgerüstet ist.

Der Erfindung liegt die Aufgabe zugrunde, ein Verfahren aufzuzeigen, mit dem eine hermetisch dichte, aber trotzdem peelfähige Versiegelung des genannten Behälters mit einer Folie in einer vertretbaren Zeit möglich ist.

Beim Ultraschall-Siegeln sind sehr kurze Siegelzeiten, die zwischen 0,1 und 0,5 s liegen möglich. Dabei dürfen die Dickentoleranzen im Siegelrand des Behälters jedoch bei maximal 50 µm liegen, da sonst kein gleichmäßiger Siegeldruck über die ganze Siegellinie erzeugt werden kann. Diese Dickentoleranzen sind mit den gängigen Tiefziehwerkzeugen mit Mehrfachnutzen jedoch nicht realisierbar.

Beim Heißsiegeln können zwar trotzdem dichte und peelfähige Versiegelungen erzielt werden, allerdings betragen dabei die Siegelzeiten 0.7 bis 1.5 s.

Erfindungsgemäß wird ein Verfahren vorgeschlagen, bei dem wenigstens eine der beiden miteinander zu versiegelnden Oberflächen mit einer umlaufenden Rippe versehen wird, die im wesentlichen aus Siegelmaterial hergestellt wird.

Beim Aneinanderlegen der beiden miteinander zu versiegelnden Flächen legt sich die eine Fläche an die Kippe der anderen Fläche an. Dabei kann es durchaus vorkommen, daß keine vollständige Anlage erzielt wird. Trotzdem heizt der angelegte Ultraschall die Rippe im Anlagebereich soweit auf, daß das Siegelmaterial schmilzt und sich beide Flächen näher kommen. Dadurch wird eine vollständige Anlage auch der ursprünglich nicht anliegenden Rippen-Abschnitte erreicht, so daß auch diese Abschnitte vom Ultraschall aufgeschmolzen werden können. Damit ist sichergestellt, daß trotz eventuell vorliegender Dickentoleranzen eine über den vollen Umfang geschlossene, durch Ultraschall erzeugte Siegelnaht geschaffen wird.

Bei einem derartigen Siegelverfahren können trotz erheblicher Dickentoleranzen in den miteinander zu versiegelnden Flächen Siegelzeiten zwischen 0.1 und 0.5 s erreicht werden.

Eine vorteilhafte Ausgestaltung des erfindungsgemäßen Verfahrens liegt darin, daß die Höhe der Rippe etwa 0.05 bis 0.3 mm beträgt.

Damit ist es möglich, selbst erhebliche Dickenunterschiede der miteinander zu versiegelnden Flächen im Verlauf der Siegelnaht auszugleichen und im UltraschallSiegelverfahren eine dichte Siegelnaht herzustellen.

Als sehr vorteilhaft hat es sich dabei erwiesen, wenn gemäß einer weiteren Ausgestaltung der Erfindung die Kippe eine Breite von etwa 0.5 bis 2.5 mm aufweist.

Diese Breite stellt zum einen sicher, daß genügend Siegelmaterial zum Verdrängen zur Verfügung steht und zum anderen, daß eine stabile Siegelnaht erzeugt werden kann.

Ein im Tiefziehverfahren hergestellter Behälter wird gleichzeitig mit einem Siegelrand versehen. Dabei werden in einer gemeinsamen Tiefzieh-Form gleichzeitig mehrere Behälter hergestellt. Die zum Tiefziehen verwendete Flachfolie ist auf ihrer die Behälterinnenseite bildenden Seite mit einer Siegelschicht versehen, die eine Dicke zwischen 0.02 und 0.2 mm aufweist und im Coextrusionsverfahren aufgebracht ist. Innerhalb des Siegelrandes wird eine umlaufende Kippe erzeugt, welche im wesentlichen aus Siegelmaterial besteht und eine Höhe von 0.05 bis 0.3 mm aufweist. Die Breite dieser umlaufenden Kippe beträgt etwa 0.5 bis 2.5 mm.

Zum Verschließen des Behälters wird eine Folie auf den Siegelrand aufgelegt und mittels eines Ultraschall-Siegelwerkzeuges gegen den Siegelrand bzw. die Rippe aus Siegelmaterial gepreßt. Aufgrund der beim Tiefziehen entstandenen Toleranzen im Bereich des Siegelrandes liegt die Folie nicht vollständig auf der Rippe auf, wodurch beim Beaufschlagen mit Ultraschall nur die Anlageflächen aufgeschmolzen werden. Dabei kann das bereits aufgeschmolzene Material verdrängt werden und die Folie kommt zur vollständigen Anlage an die Rippe, wodurch diese auf ihrer gesamten Länge geschmolzen wird. Damit wird eine hermetisch geschlossene Behälter-Packung erzeugt.

## Patentansprüche

1. Verfahren zum Versiegeln eines mit einem Siegelrand versehenen Behälters, der aus einer Kunststoff-Folie im Tiefziehverfahren hergestellt wird, mit einer Folie, die siegelfähig ausgerüstet ist, **dadurch gekennzeichnet**, daß wenigstens eine der beiden miteinander zu versiegelnden Oberflächen mit einer umlaufenden Rippe versehen wird, die im wesentlichen aus Siegelmaterial hergestellt wird.

2. Verfahren nach Anspruch 1, **dadurch gekennzeichnet**, daß die Höhe der Rippe etwa 0.05 bis 0.3 mm beträgt.

3. Verfahren nach Anspruch 1 oder 2, **dadurch gekennzeichnet**, daß die Rippe eine Breite von etwa 0.5 bis 2.5 mm aufweist.
